# FASCICULE DE BREVET EUROPEEN

(11) **EP 4 683 892 B1**
(45) Date de publication et mention de la délivrance du brevet: **04.11.2026**
(21) Numéro de dépôt: 24712083.5
(22) Date de dépôt: 21.03.2024
(51) Int. Cl.: C04B 28/00, C04B 28/02, C04B 28/08, C04B 111/76

(54) **COMPOSITION DE LIANT HYDRAULIQUE**
HYDRAULISCHE BINDEMITTELZUSAMMENSETZUNG
HYDRAULIC BINDER COMPOSITION

(30) Priorité: 23.03.2023 FR 2302756
(43) Date de publication de la demande: 28.01.2026
(73) Titulaire: Saint-Gobain Weber France, 94370 Sucy en Brie (FR)
(72) Inventeur: TABBAL, Dimitri, Abu Dhabi (AE); TOKADE, Satish Nivrutti, Abu Dhabi (AE)
(74) Mandataire: Saint-Gobain Recherche
(86) Numéro de dépôt international: PCT/EP2024/057522
(87) Numéro de publication internationale: WO 2024/194390

(56) Documents cités:
- EP-B1- 3 458 426
- WO-A1-2016/102867
- CN-A- 109 231 860
- FR-A1- 3 053 040
- US-A1- 2020 385 311

## Description

La présente invention concerne le domaine des matériaux de construction. Plus précisément, l'invention porte sur des compositions de liant hydraulique ainsi que sur des compositions de mortier sec comprenant ledit liant hydraulique.

Dans l'objectif de diminuer les quantités de CO₂ rejetées dans l'atmosphère, on cherche aujourd'hui à substituer une partie ou la totalité du ciment Portland utilisé dans la fabrication de béton ou de mortier par d'autres liants hydrauliques à plus faible empreinte carbone. On connait ainsi des liants hydrauliques dans lesquels une partie ou la totalité du ciment Portland est substituée par des sous-produits de l'industrie sidérurgique ou des centrales thermiques à charbon, tels que les laitiers de hauts fourneaux et les cendres volantes. Ces composés sont toutefois peu hydrauliques par nature, de sorte qu'il est nécessaire d'ajouter un activateur afin de les rendre plus réactifs. Il est par exemple connu d'utiliser des agents fortement alcalins, ce qui présente toutefois l'inconvénient d'entraîner de fortes augmentations de pH, en rendant délicate la manipulation de tels liants et en risquant de provoquer de fortes irritations.

Afin de répondre à ce problème, la demande WO2016102867 propose d'activer des laitiers de haut-fourneau ou des cendres volantes à l'aide d'un système d'activation comprenant un sel dérivé de l'acide phosphorique et éventuellement un silicate de métal alcalin et/ou de l'hydroxyde de calcium. Un système d'activation est un système comprenant un ou plusieurs composés destinés à améliorer et/ou accélérer la prise et / ou le durcissement du liant. L'activation « douce » proposée par cette demande permet en outre d'atteindre de bonnes résistances mécaniques, même au jeune âge.

Cette solution n'est toutefois pas dénuée d'inconvénients. Il apparaît en effet que le temps de prise à basse température (10°C et moins) d'un tel liant est relativement élevé.

Le document FR 3 053 040 propose un système d'activation qui consiste en un mélange de 30 à 70 % en poids d'un sel dérivé de l'acide phosphorique, 10 à 50 % en poids d'un silicate d'un métal alcalin choisi parmi le potassium, le lithium et/ou le sodium, et 10 à 50 % en poids d'une source de métal alcalinoterreux, choisie parmi la chaux et/ou les sels de calcium.

L'invention a pour but d'obvier à cet inconvénient en proposant un liant hydraulique à faible empreinte carbone présentant un faible temps de prise à basse température ainsi qu'une bonne résistance mécanique, notamment une forte adhérence par traction.

A cet effet, l'invention a pour objet un liant hydraulique comprenant :
i) 65 à 95% en poids d'un composé aluminosilicate comprenant au moins 10% en poids d'oxydes alcalinoterreux, et
ii) 5 à 35% en poids d'un système d'activation dudit composé aluminosilicate, ledit système d'activation comprenant un sel dérivé de l'acide phosphorique, un silicate de métal alcalin, une source d'aluminium, et de l'hydroxyde de calcium,
ledit système d'activation étant tel que la somme (A+C) de la teneur (A) en source d'aluminium et de la teneur (C) en hydroxyde de calcium est comprise entre 50 et 80% par rapport au poids de système d'activation, et que le rapport (C/A) entre la teneur pondérale en hydroxyde de calcium et la teneur pondérale en source d'aluminium est compris entre 1,0 et 4,0.

Un autre objet de l'invention est une composition de mortier sec comprenant un tel liant hydraulique et des granulats.

Un autre objet de l'invention est un produit de construction obtenu par gâchage d'une composition comprenant un liant hydraulique selon l'invention avec de l'eau puis durcissement.

Le composé aluminosilicate comprend de préférence 15-65% en poids, notamment au moins 20-60%, et même au moins 30-55% en poids d'oxydes alcalinoterreux, notamment de CaO et/ou de MgO. Le composé aluminosilicate comprend de préférence 25-70%, notamment 30-40%, de silice (SiO₂) et 5-35%, notamment 7-20%, d'alumine (Al₂O₃).

Le composé aluminosilicate est de préférence un sous-produit de l'industrie. Il est de préférence choisi parmi les laitiers, notamment les laitiers de haut-fourneau granulés broyés, et les cendres volantes, notamment les cendres volantes de classe C.

Le sel dérivé de l'acide phosphorique est de préférence un phosphate de métal alcalin. Le métal alcalin est notamment choisi parmi le sodium, le potassium, le lithium et les mélanges de deux ou plus de ces métaux alcalins. Le métal alcalin est de préférence du sodium. Le phosphate est préférentiellement un polyphosphate, en particulier un diphosphate ou un triphosphate. Les phosphates de sodium, notamment le triphosphate de sodium (Na₅P₃O₁₀), sont particulièrement préférés.

Le métal alcalin du silicate de métal alcalin est de préférence choisi parmi le sodium, le potassium, le lithium et les mélanges de deux ou plus de ces métaux alcalins. Le silicate de métal alcalin est de préférence un silicate de sodium, notamment du métasilicate de sodium (Na₂SiO₃), éventuellement hydraté (Na₂SiO₃.nH₂O).

La source d'aluminium est de préférence une source d'aluminate de calcium. Elle est de préférence un ciment alumineux. D'autres sources possibles sont les laitiers alumineux, les laitiers de poche et l'hydroxyde d'aluminium.

De préférence, le sel dérivé de l'acide phosphorique est un polyphosphate de sodium, notamment le triphosphate de sodium, le silicate de métal alcalin est du métasilicate de sodium, notamment hydraté, et la source d'aluminium est un ciment alumineux.

La somme (A+C) de la teneur (A) en source d'aluminium et de la teneur (C) en hydroxyde de calcium est de préférence comprise entre 52 et 75%, notamment entre 55 et 70%, par rapport au poids de système d'activation. Le rapport C/A est de préférence compris entre 1,2 et 3,0, notamment entre 1,4 et 2,0.

Les inventeurs ont pu observer que la présence simultanée, en teneurs élevées, d'une source d'aluminium et d'hydroxyde de calcium, permettait de réduire fortement le temps de prise à basse température, mais sans dégrader la résistance mécanique. La source d'aluminium, notamment d'aluminate de calcium, permet de réduire le temps de prise à basse température, mais, lorsque son ajout n'est pas accompagné d'un ajout d'hydroxyde de calcium, au détriment de la résistance mécanique du mortier.

La teneur A est de préférence comprise entre 15 et 35%, notamment entre 20 et 30%. La teneur C est de préférence comprise entre 30 et 45%, notamment entre 35 et 40%. Toutes ces teneurs sont calculées par rapport au poids de système d'activation.

La teneur (P) en sel dérivé de l'acide phosphorique est de préférence comprise entre 5 et 25%, notamment entre 10 et 20%, par rapport au poids de système d'activation. La teneur (S) en silicate de métal alcalin est de préférence comprise entre 10 et 40%, notamment entre 20 et 30%, par rapport au poids de système d'activation. Le silicate de métal alcalin permet de réduire le temps de prise et d'augmenter l'adhérence par traction, mais des teneurs élevées peuvent dégrader le temps ouvert ainsi que l'ouvrabilité du mortier.

De préférence, le système d'activation est tel que A+C+P+S est d'au moins 85%, notamment d'au moins 90% ou d'au moins 95%, voire de 100%. Dans ce dernier cas, le système d'activation consiste en un sel dérivé de l'acide phosphorique, un silicate de métal alcalin, une source d'aluminium, et de l'hydroxyde de calcium.

Le système d'activation peut alternativement comprendre d'autres composés, notamment des carbonates de métaux alcalins et/ou alcalinoterreux ou des sulfates de métaux alcalins et/ou alcalinoterreux.

De préférence, le liant hydraulique comprend au plus 5% et même au plus 2% en poids de ciment Portland. De préférence, la teneur en ciment Portland dans le liant hydraulique (et dans la composition de mortier sec) est nulle.

La teneur en composé aluminosilicate est de préférence comprise entre 70 et 92%, notamment entre 80 et 90%, par rapport au poids de liant hydraulique. La teneur en système d'activation est de préférence comprise entre 8 et 30%, notamment entre 10 et 20%, par rapport au poids de liant hydraulique. De préférence, le liant hydraulique est constitué du composé aluminosilicate et du système d'activation.

La composition de mortier sec selon l'invention comprend un liant hydraulique tel que décrit précédemment ainsi que des granulats. La composition ne comprend normalement pas d'autre liant hydraulique que le liant selon l'invention.

De préférence, la teneur en liant hydraulique est comprise entre 5 et 60%, notamment entre 15 et 50%, par rapport au poids de composition de mortier sec. De préférence, la teneur en granulats est comprise entre 30 et 90%, notamment entre 40 et 80%, par rapport au poids de composition de mortier sec.

Les granulats sont notamment des sables et/ou fillers, siliceux, calcaires et/ou dolomitiques. On entend par « fillers » des granulats dont la taille est inférieure à 63 µm et par « sables » des granulats dont la taille est comprise entre 63 µm et 4 mm. Les granulats peuvent comprendre des granulats recyclés, par exemple issus de démolition, ou des sous-produits industriels, voire des sables issus de concassage de roche. Les granulats peuvent également comprendre des granulats légers, notamment ayant une masse volumique apparente inférieure à 200 kg/m³. Les granulats légers sont notamment choisis parmi la perlite, la vermiculite, les billes de verre expansé, les billes de polystyrène expansé, les cénosphères, les silicates expansés, les aérogels, les poudres de polymères thermodurcissables broyés et les mélanges de deux ou plus de ces composés.

La composition de mortier sec peut en outre comprendre au moins un additif choisi parmi les agents dispersants, les agents mouillants (notamment en une teneur comprise entre 0,05 et 0,2% ; par exemple des alkylsulfonates chimiquement modifiés), les poudres de polymères redispersables (notamment en une teneur comprise entre 0,5 et 10%, préférentiellement entre 0,8 et 5%, et même entre 1 et 4%), les accélérateurs ou retardateurs de prise et/ou de durcissement (notamment en une teneur comprise entre 0,1 et 1%, par exemple du formiate de calcium), les agents épaississants comme les éthers de cellulose et les éthers d'amidon (notamment en une teneur comprise entre 0,2 et 0,7%), les plastifiants (par exemple à base d'acide polycarboxylique), les superplastifiants (par exemple à base de polyacrylates), les agents rhéologiques, les agents entraîneurs d'air, les agents biocides, les pigments et les fibres. Les polymères redispersables sont notamment des (co)polymères vinyliques et/ou acryliques, par exemple des copolymères styrène-acrylique.

La composition de mortier sec est de préférence une composition sèche de mortier-colle pour colle à carrelage. Dans un tel cas, la composition de mortier sec comprend de préférence 20 à 50% en poids de liant hydraulique et 45 à 80% en poids de granulats. La composition selon l'invention peut aussi être une composition de mortier de maçonnerie, de mortier de jointoiement, de mortier pour enduit de façade (intérieur ou extérieur), de mortier de collage pour système d'isolation par l'extérieur, de mortier de ragréage, de mortier de réparation, de sous-enduit pour système d'isolation par l'extérieur, de mortier pour chappe ou revêtement de sol, de mortier pour fabrication additive etc. Dans de tels cas, la composition de mortier sec comprend de préférence 5 à 20% en poids de liant hydraulique et 60 à 90% en poids de granulats.

Le produit de construction selon l'invention peut notamment être un élément préfabriqué, une brique, une plaque, un bloc ou encore un revêtement. La composition peut comprendre le liant hydraulique seul, ou encore un mélange de liant hydraulique et de granulats. Il peut notamment s'agir d'un béton ou d'un mortier durci.

Les exemples qui suivent illustrent l'invention de manière non-limitative.

Des compositions de mortier sec comprenant 32% de laitier de haut-fourneau granulé broyé, 2,9% de divers adjuvants (agents rhéologiques, superplastifiants, poudres de polymère redispersable etc...), un système d'activation, et le reste en sable (< 0,60 mm) ont été préparées. Le système d'activation était constitué de ciment alumineux, de chaux hydratée (hydroxyde de calcium), de métasilicate de sodium pentahydraté et de tripolyphosphate de sodium.

Le tableau 1 ci-après récapitule les résultats obtenus. Il indique pour chaque composition de mortier les valeurs de A, C, P et S telles que précédemment définies (calculées par rapport au poids de système d'activation), ainsi que le poids total (noté W) de système d'activation par rapport à la composition de mortier, toutes ces teneurs étant indiquées en pourcents.

Le temps de prise (TP) à 10°C, exprimé en heures, correspond au temps de fin de prise selon la norme EN 196-3. La résistance à la compression (RC) à 28 jours, exprimée en MPa, a été mesurée selon la norme ASTM C109 sur des cubes de 5*5*5 cm³ durcis à l'air.

**[Tableaux1]**

| | W | A | C | P | S | TP (h) | RC (MPa) |
|---|---|---|---|---|---|---|---|
| C1 | 2,7 | - | 25,9 | 25,9 | 48,1 | 30 | 6,0 |
| C2 | 3,2 | 15,6 | 21,9 | 21,9 | 40,6 | 50 | 5,0 |
| C3 | 3,7 | 27,0 | 18,9 | 18,9 | 35,1 | 45 | 1,2 |
| C4 | 4,2 | 35,7 | 16,7 | 16,7 | 31,0 | 32 | 1,0 |
| C5 | 4,7 | 42,6 | 14,9 | 14,9 | 27,7 | 12 | 1,9 |
| C6 | 3,7 | 6,5 | 29,0 | 22,6 | 41,9 | 38 | 9,0 |
| C7 | 3,7 | 13,5 | 18,9 | 32,4 | 35,1 | 50 | 1,0 |
| C8 | 4,7 | 21,3 | 14,9 | 36,2 | 27,7 | 50 | 1,0 |
| C9 | 5,7 | 26,3 | 12,3 | 38,6 | 22,8 | 50 | 1,0 |
| C10 | 6,7 | 29,9 | 10,4 | 40,3 | 19,4 | 36 | 0,5 |
| 1 | 4,7 | 21,3 | 36,2 | 14,9 | 27,7 | 24 | 9,6 |
| 2 | 5,7 | 26,3 | 38,6 | 12,3 | 22,8 | 5 | 11,8 |
| 3 | 6,7 | 29,9 | 40,3 | 10,4 | 19,4 | 5 | 13,6 |

Les exemples C1 à C10 sont des exemples comparatifs. Ils montrent que l'ajout de ciment alumineux permet, pour des teneurs élevées, de réduire le temps de prise, mais que cette réduction s'accompagne d'une forte dégradation de la résistance mécanique. Les exemples 1 à 3 selon l'invention montrent que l'utilisation simultanée de chaux et de ciment alumineux permet d'obtenir à la fois de faibles temps de prise à basse température et une résistance mécanique améliorée.

L'exemple 1 a également été testé en termes d'adhérence par traction (selon la norme EN 12004-2). L'adhérence par traction était très bonne (1,3 MPa en valeur initiale, 1 MPa après immersion dans l'eau, 1,4 MPa après action de la chaleur, 1,1 MPa après temps ouvert de 30 minutes et 1 MPa après cycles de gel-dégel). Cette composition peut donc être utilisée comme mortier-colle de classe C2E.

## Revendications

1. Liant hydraulique comprenant :
i) 65 à 95% en poids d'un composé aluminosilicate comprenant au moins 10% en poids d'oxydes alcalinoterreux, et
ii) 5 à 35% en poids d'un système d'activation dudit composé aluminosilicate, ledit système d'activation comprenant un sel dérivé de l'acide phosphorique, un silicate de métal alcalin, une source d'aluminium, et de l'hydroxyde de calcium,
ledit système d'activation étant tel que la somme (A+C) de la teneur (A) en source d'aluminium et de la teneur (C) en hydroxyde de calcium est comprise entre 50 et 80% par rapport au poids de système d'activation, et que le rapport (C/A) entre la teneur pondérale en hydroxyde de calcium et la teneur pondérale en source d'aluminium est compris entre 1,0 et 4,0.

2. Liant hydraulique selon la revendication 1, dans lequel le composé aluminosilicate est choisi parmi les laitiers, notamment les laitiers de haut-fourneau granulés broyés, et les cendres volantes, notamment les cendres volantes de classe C.

3. Liant hydraulique selon l'une des revendications précédentes, dans lequel le sel dérivé de l'acide phosphorique est un phosphate de métal alcalin, notamment un phosphate de sodium.

4. Liant hydraulique selon l'une des revendications précédentes, dans lequel le silicate de métal alcalin est un silicate de sodium, notamment du métasilicate de sodium.

5. Liant hydraulique selon l'une des revendications précédentes, dans lequel la source d'aluminium est une source d'aluminate de calcium, notamment est un ciment alumineux.

6. Liant hydraulique selon l'une des revendications précédentes, dans lequel la somme A+C est comprise entre 52 et 75%, notamment entre 55 et 70%.

7. Liant hydraulique selon l'une des revendications précédentes, dans lequel le rapport C/A est compris entre 1,2 et 3,0, notamment entre 1,4 et 2,0.

8. Liant hydraulique selon l'une des revendications précédentes, dans lequel :
- la teneur en source d'aluminium est comprise entre 15 et 35% par rapport au poids de système d'activation, et/ou
- la teneur en hydroxyde de calcium est comprise entre 30 et 45% par rapport au poids de système d'activation.

9. Liant hydraulique selon l'une des revendications précédentes, dans lequel la teneur en sel dérivé de l'acide phosphorique est comprise entre 5 et 25%, notamment entre 10 et 20%, par rapport au poids de système d'activation.

10. Liant hydraulique selon l'une des revendications précédentes, dans lequel la teneur en silicate de métal alcalin est comprise entre 10 et 40%, notamment entre 20 et 30%, par rapport au poids de système d'activation.

11. Liant hydraulique selon l'une des revendications précédentes, dans lequel la teneur en composé aluminosilicate est comprise entre 70 et 92%, notamment entre 80 et 90%, par rapport au poids de liant hydraulique.

12. Composition de mortier sec comprenant un liant hydraulique selon l'une des revendications précédentes et des granulats.

13. Composition de mortier sec selon la revendication précédente, dans laquelle la teneur en liant hydraulique est comprise entre 5 et 60% et la teneur en granulats est comprise entre 30 et 90%, par rapport au poids de composition de mortier sec.

14. Composition de mortier sec selon l'une des revendications 12 ou 13, qui est une composition sèche de mortier-colle pour colle à carrelage, une composition de mortier de maçonnerie, une composition de mortier de jointoiement, une composition de mortier pour enduit de façade, une composition de mortier de collage pour système d'isolation par l'extérieur, une composition de mortier de ragréage, une composition de mortier de réparation, une composition de sous-enduit pour système d'isolation par l'extérieur, une composition de mortier pour chappe ou revêtement de sol, ou une composition de mortier pour fabrication additive.

15. Produit de construction obtenu par gâchage d'une composition comprenant un liant hydraulique selon l'une des revendications 1 à 11 avec de l'eau puis durcissement.

## Patentansprüche

1. Hydraulisches Bindemittel, umfassend:
i) zu 65 bis 95 Gew.-% eine Aluminosilicatverbindung, umfassend mindestens zu 10 Gew.-% Erdalkalioxide, und
ii) zu 5 bis 35 Gew.-% ein Aktivierungssystem der Aluminosilicatverbindung, das Aktivierungssystem umfassend ein von Phosphorsäure abstammendes Salz, ein Alkalimetallsilicat, eine Aluminiumquelle und Calciumhydroxid,
wobei das Aktivierungssystem derart ist, dass die Summe (A+C) aus dem Gehalt (A) an Aluminiumquelle und dem Gehalt (C) an Calciumhydroxid zwischen 50 und 80 %, bezogen auf das Gewicht des Aktivierungssystems, liegt und dass das Verhältnis (C/A) zwischen dem Gewichtsanteil an Calciumhydroxid und dem Gewichtsanteil an Aluminiumquelle zwischen 1,0 und 4,0 liegt.

2. Hydraulisches Bindemittel nach Anspruch 1, wobei die Aluminosilicatverbindung aus Schlacken, insbesondere gemahlenen granulierten Hochofenschlacken, und Flugaschen, insbesondere Flugaschen der Klasse C, ausgewählt ist.

3. Hydraulisches Bindemittel nach einem der vorstehenden Ansprüche, wobei das von Phosphorsäure abstammende Salz ein Alkalimetallphosphat, insbesondere ein Natriumphosphat, ist.

4. Hydraulisches Bindemittel nach einem der vorstehenden Ansprüche, wobei das Alkalimetallsilicat ein Natriumsilicat, insbesondere Natriummetasilicat, ist.

5. Hydraulisches Bindemittel nach einem der vorstehenden Ansprüche, wobei die Aluminiumquelle eine Calciumaluminatquelle, insbesondere ein Tonerdezement, ist.

6. Hydraulisches Bindemittel nach einem der vorstehenden Ansprüche, wobei die Summe A+C zwischen 52 und 75 %, insbesondere zwischen 55 und 70 %, liegt.

7. Hydraulisches Bindemittel nach einem der vorstehenden Ansprüche, wobei das Verhältnis C/A zwischen 1,2 und 3,0, insbesondere zwischen 1,4 und 2,0, liegt.

8. Hydraulisches Bindemittel nach einem der vorstehenden Ansprüche, wobei:
- der Gehalt an Aluminiumquelle zwischen 15 und 35 %, bezogen auf das Gewicht des Aktivierungssystems, liegt, und/oder
- der Gehalt an Calciumhydroxid zwischen 30 und 45 %, bezogen auf das Gewicht des Aktivierungssystems, liegt.

9. Hydraulisches Bindemittel nach einem der vorstehenden Ansprüche, wobei der Gehalt an von Phosphorsäure abstammendem Salz zwischen 5 und 25 %, insbesondere zwischen 10 und 20 %, bezogen auf das Gewicht des Aktivierungssystems, liegt.

10. Hydraulisches Bindemittel nach einem der vorstehenden Ansprüche, wobei der Gehalt an Alkalimetallsilicat zwischen 10 und 40 %, insbesondere zwischen 20 und 30 %, bezogen auf das Gewicht des Aktivierungssystems, liegt.

11. Hydraulisches Bindemittel nach einem der vorstehenden Ansprüche, wobei der Gehalt an Aluminosilicatverbindung zwischen 70 und 92 %, insbesondere zwischen 80 und 90 %, bezogen auf das Gewicht des hydraulischen Bindemittels, liegt.

12. Trockenmörtelzusammensetzung, umfassend ein hydraulisches Bindemittel nach einem der vorstehenden Ansprüche und Zuschlagstoffe.

13. Trockenmörtelzusammensetzung nach dem vorstehenden Anspruch, wobei der Gehalt an hydraulischem Bindemittel zwischen 5 und 60 % liegt und der Gehalt an Zuschlagstoffen zwischen 30 und 90 % liegt, bezogen auf das Gewicht der Trockenmörtelzusammensetzung.

14. Trockenmörtelzusammensetzung nach einem der Ansprüche 12 oder 13, die eine trockene Klebemörtelzusammensetzung für Fliesenkleber, eine Mauermörtelzusammensetzung, eine Fugenmörtelzusammensetzung, eine Mörtelzusammensetzung für Fassadenputz, eine Klebemörtelzusammensetzung für ein Wärmedämmverbundsystem, eine Endbearbeitungsmörtelzusammensetzung, eine Reparaturmörtelzusammensetzung, eine Unterputzzusammensetzung für ein Wärmedämmverbundsystem, eine Mörtelzusammensetzung für Estrich oder Bodenbelag oder eine Mörtelzusammensetzung für additive Fertigung ist.

15. Bauprodukt, das durch Anmischen einer Zusammensetzung, umfassend ein hydraulisches Bindemittel nach einem der Ansprüche 1 bis 11, mit Wasser und anschließendes Aushärten erhalten wird.

## Claims

1. A hydraulic binder comprising:
i) 65 to 95% by weight of an aluminosilicate compound comprising at least 10% by weight of alkaline earth oxides, and
ii) 5 to 35% by weight of an activation system for said aluminosilicate compound, said activation system comprising a salt derived from phosphoric acid, an alkali metal silicate, an aluminum source, and calcium hydroxide,
said activation system being such that the sum (A+C) of the aluminum source content (A) and the calcium hydroxide content (C) is between 50 and 80% with respect to the activation system weight, and that the ratio (C/A) of the calcium hydroxide content by weight to the aluminum source content by weight is between 1.0 and 4.0.

2. The hydraulic binder according to claim 1, wherein the aluminosilicate compound is selected from slag, notably ground granulated blast furnace slag, and fly ash, notably class C fly ash.

3. The hydraulic binder according to one of the preceding claims, wherein the salt derived from phosphoric acid is an alkali metal phosphate, notably a sodium phosphate.

4. The hydraulic binder according to one of the preceding claims, wherein the alkali metal silicate is a sodium silicate, notably sodium metasilicate.

5. The hydraulic binder according to one of the preceding claims, wherein the aluminum source is a calcium aluminate source, notably an calcium aluminate cement.

6. The hydraulic binder according to one of the preceding claims, wherein the sum A+C is between 52 and 75%, notably between 55 and 70%.

7. The hydraulic binder according to one of the preceding claims, wherein the C/A ratio is between 1.2 and 3.0, notably between 1.4 and 2.0.

8. The hydraulic binder according to one of the preceding claims, wherein:
- the aluminum source content is between 15 and 35% with respect to the activation system weight, and/or
- the calcium hydroxide content is between 30 and 45% with respect to the activation system weight.

9. The hydraulic binder according to one of the preceding claims, wherein the content of salt derived from phosphoric acid is between 5 and 25%, notably between 10 and 20%, with respect to the activation system weight.

10. The hydraulic binder according to one of the preceding claims, wherein the alkali metal silicate content is between 10 and 40%, notably between 20 and 30%, with respect to the activation system weight.

11. The hydraulic binder according to one of the preceding claims, wherein the aluminosilicate compound content is between 70 and 92%, notably between 80 and 90%, with respect to the weight of hydraulic binder.

12. A dry mortar composition comprising a hydraulic binder according to one of the preceding claims and aggregates.

13. The dry mortar composition according to the preceding claim, wherein the hydraulic binder content is between 5 and 60% and the aggregate content is between 30 and 90%, with respect to the weight of dry mortar composition.

14. The dry mortar composition according to one of claims 12 or 13, which is a dry adhesive mortar composition for tiling adhesive, a masonry mortar composition, a jointing mortar composition, a mortar composition for facade rendering, a bonding mortar composition for exterior insulation system, a smoothing mortar composition, a repair mortar composition, an basecoat mortar composition for exterior insulation systems, a screed or floor covering mortar composition, or a mortar composition for additive manufacturing.

15. A construction product obtained by mixing a composition comprising a hydraulic binder according to one of claims 1 to 11 with water and then hardening.
